# EUROPEAN PATENT SPECIFICATION

(11) **EP 0 943 277 B1**
(45) Date of publication and mention of the grant of the patent: **23.01.2002**
(21) Application number: 98830157.8
(22) Date of filing: 20.03.1998
(51) Int. Cl.: A47J 43/00, A47J 43/26

(54) **Nutcracker**
Nussbrecher
Casse-noix

(43) Date of publication of application: 22.09.1999
(73) Proprietor: Cad Project S.r.l. di Facchinetti Bruno, S. Pietro Mosezzo (Novara) (IT)
(72) Inventor: Faccinetti, Carlo, 28100 Novara (IT)
(74) Representative: Siniscalco, Fabio

(56) References cited:
- BE-A- 374 488
- FR-A- 1 163 582
- FR-E- 60 299
- GB-A- 308 486
- US-A- 3 280 867
- US-A- 3 338 281

## Description

The subject of the present invention is a nutcracker.

As is well known, the nutcracker is an implement for breaking the hard shell of certain fruits, such as walnuts, almonds, hazelnuts, etc., and usually consists of two toothed jaws hinged together at one end and each extending, at the other end, into two respective integral handles.

The nut is placed between the jaws and, by using the two handles as levers and squeezing them together in one's hand, a pressure is exerted on the nut via the jaws such as to break its shell.

However, a nutcracker of this type does not always work as well as it might; it does not always allow the user to break the shell at the first attempt and does not always protect him from mishaps if the nutcracker is being used incorrectly.

Hazardous situations can occur in particular if the shell of the nut is very hard or if the nut is larger than usual.

If the shell of the nut is very hard, the user is obliged to exert considerable force on the handles of the nutcracker and, when the shell does eventually crack, the jaws close suddenly, risking injury to the user's hands.

If the nut is larger than usual, the user has to open the jaws very wide and, consequently, he is unable to exert the force needed to break the shell. Indeed, overstretching and forcing one's grip excessively in such a situation can be even more dangerous than in the previous case since, once the shell has cracked, the jaws close with an even more violent force.

In the first case - i.e. when the shell is very hard - the user also tends to open the jaws too wide, with the consequences that this entails, because he will try to place the nut as close as possible to the point

It is also worth adding that the shell of the nut can sometimes be so hard that even a supreme effort is not enough to break it.

The object of the present invention is to provide a nutcracker that enables the above drawbacks to be overcome.

From documents US-A-3280867 and US-A-3338281 a nutcracker is known comprising a first and a second jaw which are hinged together at one end, wherein the first jaw extends into a first integral handle while the other end of the second jaw extends into a first lever, which is hinged to the second jaw, and a second lever, which is hinged to the first lever and to the first jaw, the second lever forming a second handle which is attached to the first handle so that the nutcracker can be squeezed shut.

The nutcracker according to the invention is set out in claim 1.

In order to gain a better understanding of the invention, a description is given below of two illustrative embodiments which are illustrated in the appended drawings, in which:
Fig. 1 shows a nutcracker according to the invention in the closed position;
Fig. 2 shows the nutcracker of Fig. 1 in the open position;
Fig. 3 is a cross-section on III-III of a detail of the nutcracker of Fig. 1;
Fig. 4 shows another nutcracker according to the invention in the closed position; and
Fig. 5 shows the nutcracker of Fig. 4 in the open position.

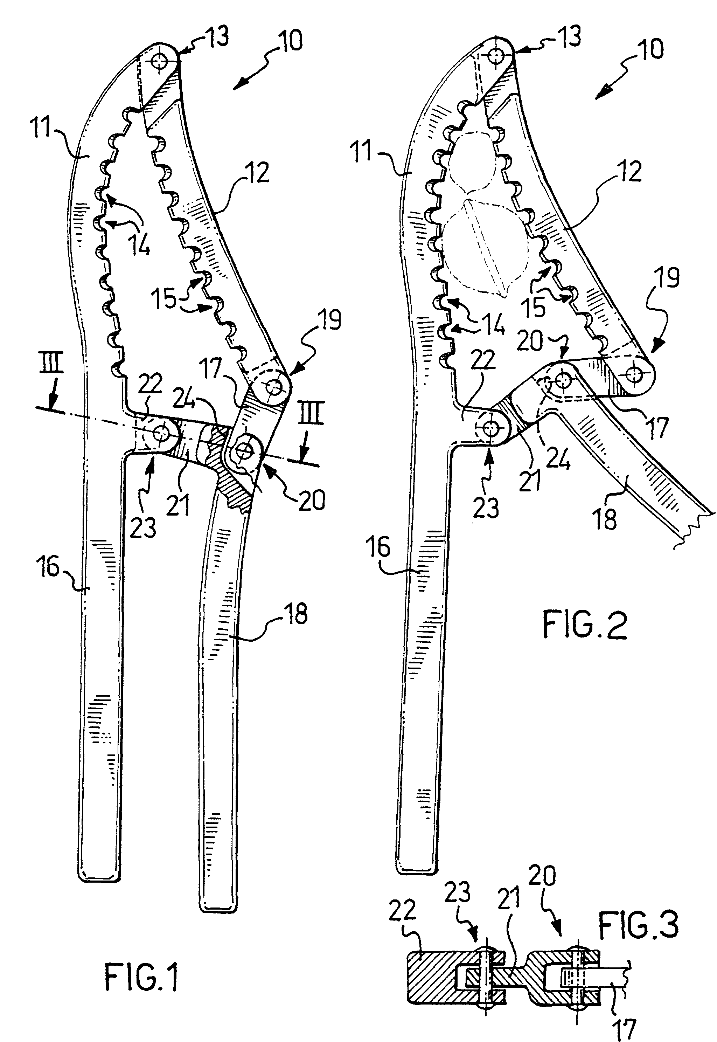

The nutcracker of Fig. 1, which is denoted overall by the reference 10, comprises two jaws 11 and 12 which are connected together at one end by means of a pin joint 13. The jaws 11 and 12 each have an opposing set of teeth 14 and 15.

At the opposite end to its hinged end, the jaw 11 extends into a handle 16 which is made in one piece with the jaw.

Also at the opposite end to its hinged end, the other jaw 12 extends into a lever 17 and into a further lever 18. One end of the lever 17 is connected to the end of the jaw 12 by means of a pin joint 19 and the other end of the lever 17 is connected to one end of the lever 18 by means of another pin joint, denoted 20. At the pin joint 20 the lever 18 extends transversely into a portion 21 which is connected to a projecting portion 22 on the jaw 11 by means of a pin joint 23.

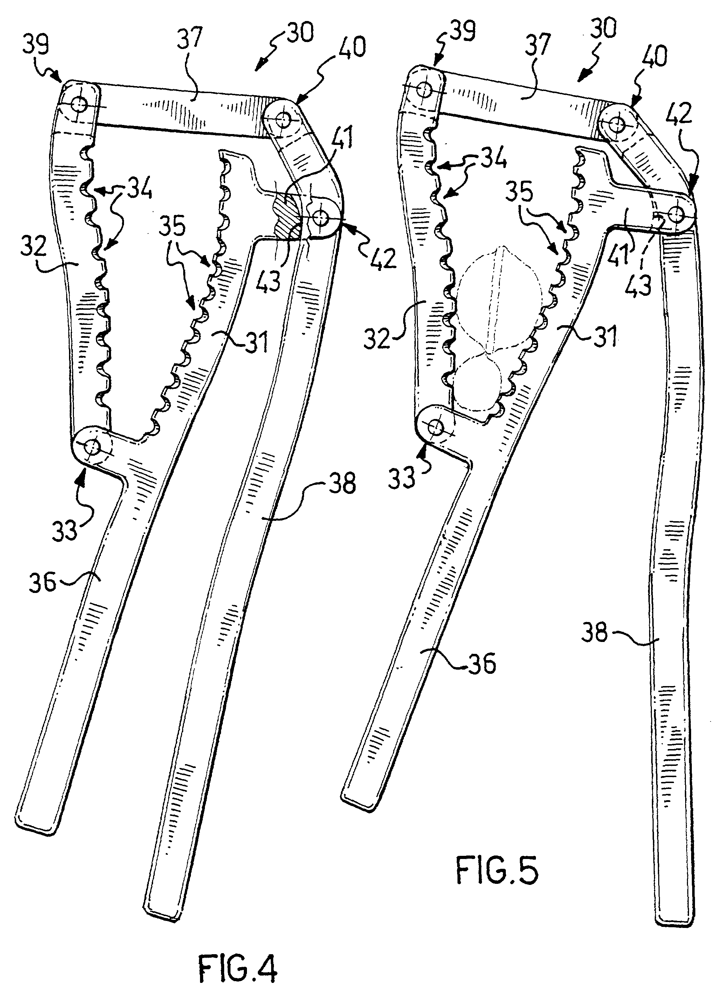

The cross-section shown in Fig. 3 clearly shows the structure of the pin joints 20 and 23. Basically, in each pin joint, one of the two hinged parts is forked, with the other part being inserted into it; the two parts are connected together by a hinge pin which allows them to rotate relative to each other about an axis. The other pin joints 13 and 19 are also formed in this way.

The lever 18 forms the other handle of the nutcracker, which is attached to the handle 16 so as to enable the nutcracker to work.

In the closed position shown in Fig. 1, the lever 17 abuts against an internal wall 24 of the lever 18, in the region of the pin joint 20. In this closed position the jaws 11 and 12 are positioned apart.

As shown in Fig. 2, in order to use the nutcracker 10, the handles 16 and 18 are opened, which also causes the jaws 11 and 12 to move slightly apart; the nut is then placed in the appropriate position between the jaws, depending on its size; and the user then squeezes the two handles together in his hand and this clamping action is transmitted directly to the jaw 11 and, through the lever 17, to the jaw 12, thereby exerting pressure on the nut and breaking its shell.

The system of levers and their associated arms makes it possible to produce great clamping pressure while exerting less force on the handles.

This makes it possible to overcome the drawbacks described in the introduction and which are due to the excessive force that the user has to exert in certain cases. The reason for this is that, since no great effort needs to be made, there is no risk of injury to the user as a result of the jaws closing suddenly.

The system of levers also enables the jaws to be pulled wide apart so that larger nuts than normal can be fitted between the jaws without having to pull the handles too far apart, thereby allowing an excellent grip of the said handles without having to force the closure action of the nutcracker. The system of levers also means that the stroke of the handles is limited, thus making the abovementioned closure action of the nutcracker safer.

The fact that the user is able to exert great pressure means that he does not have to place the nut as close as possible to the point where the jaws are hinged together and, therefore, does not have to open the said jaws so far.

The fact that the user is able to exert great pressure also means that it is possible to crack the hardest of shells.

The other nutcracker, illustrated in Figs 4 and 5 and denoted overall by the reference 30, also comprises two jaws 31 and 32 which are connected together at one end by means of a pin joint 33. In this case also the jaws 31 and 32 each have an opposing set of teeth 34 and 35.

In contrast to the previous embodiment, the jaw 31 extends into a handle 36, which is made in one piece with the jaw, at the point where it is hinged to the other jaw.

At the opposite end to its hinged end, the other jaw 32 is connected to a lever 37 which extends beyond the jaw 31 and is in turn connected to a further lever 38. More specifically, one end of the lever 37 is connected to the end of the jaw 32 by means of a pin joint 39 and the other end of the lever 37 is connected to one end of the lever 38 by means of another pin joint, denoted 40. The lever 38 is connected, in the vicinity of the free end of the jaw 31, to a projecting portion 41 on the said jaw by means of a pin joint 42.

The structure of the pin joints 33, 39, 40 and 42 is the same as for the previous embodiment.

As is immediately obvious, the position of the jaws 31 and 32 is upside down relative to their position in the previous embodiment. In addition, the two levers 37 and 38 are longer than the previous levers 17 and 18 because of the different positioning of the jaws 31, 32 and of the handle 36.

Nevertheless, in this case also, the lever 38 forms the other handle of the nutcracker, which is attached to the handle 36 so as to enable the nutcracker to work.

In the closed position, the lever 38 abuts against an internal wall 43 of the projecting portion 41 on the jaw 31, in the region of the pin joint 42.

In the closed position the jaws 31 and 32 are, in this case also, positioned apart.

The way in which the nutcracker 30 works and the advantages it offers are the same as those already discussed with respect to the nutcracker 10, except that the clamping pressures are even greater for the same user effort. The upturned arrangement of the jaws of the nutcracker 30 obviously means that, compared with the nutcracker 10, the nut is placed at the opposite end, depending on its size.

Needless to say, it is possible to modify and/or add to the embodiments described and illustrated.

The overall shape of the nutcracker, as well as the shape of its component parts and the configuration of the teeth, can differ from those illustrated.

The structure of the pin joints can also differ.

Abutment means may be provided which define the closed position of the nutcracker in a different position and/or which are structurally and functionally different to that/those provided in the above examples. Abutment elements can be located in the region of any of the pin joints of the nutcracker.

Other embodiments may be envisaged which involve a system of levers equivalent to that described above so as to obtain the same effect.

## Claims

1. Nutcracker (10; 30) comprising a first (11; 31) and a second (12; 32) jaw which are hinged together at one end, wherein the first jaw (11; 31) extends into a first integral handle (16; 36) while the other end of the second jaw (12; 32) extends into a first lever (17; 37), which is hinged to the second jaw (12; 32), and a second lever (18; 38), which is hinged to the first lever (17; 37) and to the first jaw (11; 31), the second lever (18; 38) forming a second handle which is attached to the first handle (16; 36) so that the nutcracker can be squeezed shut, **characterized in that** abutment means (24; 43) are provided at a hinge point for reciprocal abutment of the hinged parts at said hinge point to define a predetermined closure position of the nutcracker in which the jaws (11, 12; 31, 32) are positioned apart.

2. Nutcracker according to Claim 1, wherein the first handle (16) extends from the opposite end of the first jaw (11) to the end where the jaws (11, 12) are hinged together.

3. Nutcracker according to Claim 1, in which the first handle (36) extends from the first jaw (31) at the end where the jaws (31, 32) are hinged together.

4. Nutcracker according to Claim 2, in which one end of the first lever (17) is connected by means of a pin joint (19) to the corresponding end of the second jaw (12) and the other end of the first lever (17) is connected by means of a pin joint (20) to one end of the second lever (18), and in which, at the pin joint (20) with the first lever (17), the second lever (18) extends transversely into a portion (21) which is connected by means of a pin joint (23) to a projecting portion (22) on the first jaw (11).

5. Nutcracker according to Claim 4, in which, in the closed position of the nutcracker, the first lever (17) abuts against an internal wall (24) of the second lever (18), in the region of the pin joint (20) with the second lever (18).

6. Nutcracker according to Claim 3, in which one end of the first lever (37) is connected by means of a pin joint (39) to the corresponding end of the second jaw (32) and the other end of the first lever (37) is connected by means of a pin joint (40) to one end of the second lever (38), and in which the second lever (38) is connected, in the vicinity of the free end of the first jaw (31), by means of a pin joint (42), to a projecting portion (41) on the first jaw (31).

7. Nutcracker according to Claim 6, in which, in the closed position of the nutcracker, the second lever (38) abuts against an internal wall (43) of the projecting portion (41) on the first jaw (31), in the region of the pin joint (42) with the first jaw (31).

8. Nutcracker according to any of the preceding claims, in which the pin joints (13, 19, 20, 23; 33, 39, 40, 42) are made such that one of the two coupled parts is forked, with the other of the coupled parts being inserted into it, and with a hinge pin which connects the parts together and allows them to rotate relative to each other.

9. Nutcracker according to any of the preceding claims, in which the jaws (11, 12; 31, 32) each have an opposing set of teeth (14, 15; 34, 35).

## Patentansprüche

1. Nussknacker (10; 30) mit einer ersten (11;31) und einer zweiten (12; 32) Klemmbacke, die an einem Ende aneinander angelenkt sind, bei dem sich die erste Klemmbacke (11; 31) in einen ersten integralen Griff (16; 36) erstreckt, während sich das andere Ende der zweiten Klemmbacke (12; 32) in einen ersten Hebel (17; 37), der an die zweite Klemmbacke (12; 32) angelenkt ist, und in einen zweiten Hebel (18; 38) erstreckt, der an den ersten Hebel (17; 37) und die erste Klemmbacke (11;31) angelenkt ist, wobei der zweite Hebel (18; 38) einen zweiten Griff bildet, der so am ersten Griff (16; 36) befestigt ist, dass der Nussknacker zugedrückt werden kann, **dadurch gekennzeichnet, dass** Anschlageinrichtungen (24; 43) an einer Anschlagstelle für gegenseitigen Anschlag der angelenkten Teile an der Anschlagstelle vorgesehen sind, um eine vorbestimmte Verschlussposition des Nussknackers zu definieren, in der die Klemmbacken (11, 12; 31, 32) voneinander weg positioniert sind.

2. Nussknacker nach Anspruch 1, wobei sich der erste Griff (16) vom entgegengesetzten Ende der ersten Klemmbacke (11) zu dem Ende erstreckt, wo die Klemmbacken (11; 12) aneinander angelenkt sind.

3. Nussknacker nach Anspruch 1, bei dem sich der erste Griff (36) an dem Ende von der ersten Klemmbacke (31) erstreckt, wo die Klemmbacken (31, 32) aneinander angelenkt sind.

4. Nussknacker nach Anspruch 2, bei dem ein Ende des ersten Hebels (17) mittels eines Bolzengelenks (19) an das enstprechende Ende der zweiten Klemmbacke (12) angeschlossen, und das andere Ende des ersten Hebels (17) mittels eines Bolzengelenks (20) an ein Ende des zweiten Hebels (18) angeschlossen ist, und bei dem am Bolzengelenk (20) mit dem ersten Hebel (17), sich der zweite Hebel (18) quer in einen Abschnitt (21) erstreckt, der mittels eines Bolzengelenks (23) an einen vorspringenden Abschnitt (22) auf der ersten Klemmbacke (11) angeschlossen ist.

5. Nussknacker nach Anspruch 4, bei dem in der geschlossenen Position des Nussknackers, der erste Hebel (17) an einer Innenwand (24) des zweiten Hebels (18) im Bereich des Bolzengelenks (20) mit dem zweiten Hebel (18) in Anlage kommt.

6. Nussknacker nach Anspruch 3, bei dem ein Ende des ersten Hebels (37) mittels eines Bolzengelenks (39) an das entsprechende Ende der zweiten Klemmbacke (32) und das andere Ende des ersten Hebels (37) angeschlossen ist, und das andere Ende des ersten Hebels (37) mittels eines Bolzengelenks (40) an ein Ende des zweiten Hebels (38) angeschlossen ist, und bei dem der zweite Hebel (38) mittels eines Bolzengelenks (42) in unmittelbarer Nähe des freien Endes der ersten Klemmbacke (31) an einen vorspringenden Abschnitt (41) auf der ersten Klemmbacke (31) angeschlossen ist.

7. Nussknacker nach Anspruch 6, bei dem in der geschlossenen Position des Nussknackers der zweite Hebel (38) an einer Innenwand (43) des vorspringenden Abschnitts (41) auf der ersten Klemmbacke (31) im Bereich des Bolzengelenks (42) mit der ersten Klemmbacke (31) in Anlage kommt.

8. Nussknacker nach einem der vorhergehenden Ansprüche, bei dem die Bolzengelenke (13, 19, 20, 23; 33, 39, 40, 42) so hergestellt sind, dass eines der aneinander befestigten Teile gegabelt ist, wobei das andere der aneinander befestigten Teile in das erste eingeführt ist, und wobei ein die aneinander befestigten Teile miteinander verbindender Gelenkbolzen es zulässt, dass sie sich relativ zueinander drehen.

9. Nussknacker nach einem der vorhergehenden Ansprüche, bei dem die Klemmbacken (11, 12; 31, 32) jeweils einen sich gegenüberliegenden Satz Zähne (14, 15; 34, 35) aufweisen.

## Revendications

1. Casse-noix (10 ; 30) comprenant une première (11 ; 31) et une deuxième (12 ; 32) mâchoire qui sont articulées l'une à l'autre à une extrémité, dans lequel la première mâchoire (11 ; 31) s'étend en une première poignée d'un seul tenant (16 ; 36) tandis que l'autre extrémité de la deuxième mâchoire (12 ; 32) s'étend en un premier levier (17 ; 37), qui est articulé sur la deuxième mâchoire (12 ; 32), et un deuxième levier (18 ; 38), qui est articulé sur le premier levier (17 ; 37) et sur la première mâchoire (11 ; 31), le deuxième levier (18 ; 38) formant une deuxième poignée qui est fixée à la première poignée (16 ; 36) de manière que le casse-noix puisse être fermé par pression, **caractérisé en ce qu'**un moyen de butée (24 ; 43) est prévu à un point d'articulation pour butée réciproque des parties articulées audit point d'articulation afin de définir une position de fermeture prédéterminée du casse-noix dans laquelle les mâchoires (11, 12 ; 31, 32) sont espacées.

2. Casse-noix selon la revendication 1, dans lequel la première poignée (16) s'étend de l'extrémité opposée de la première mâchoire (11) jusqu'à l'extrémité où les mâchoires (11, 12) sont articulées l'une à l'autre.

3. Casse-noix selon la revendication 1, dans lequel la première poignée (36) s'étend depuis la première mâchoire (31) à l'extrémité où les mâchoires (31, 32) sont articulées l'une à l'autre.

4. Casse-noix selon la revendication 2, dans lequel une extrémité du premier levier (17) est reliée au moyen d'une articulation à tourillon (19) à l'extrémité correspondante de la deuxième mâchoire (12) et l'autre extrémité du premier levier (17) est reliée au moyen d'une articulation à tourillon (20) à une extrémité du deuxième levier (18), et dans lequel, à l'articulation à tourillon (20) avec le premier levier (17), le deuxième levier (18) s'étend transversalement dans une portion (21) qui est reliée au moyen d'une articulation à tourillon (23) à une portion en saillie (22) sur la première mâchoire (11).

5. Casse-noix selon la revendication 4, dans lequel, dans la position fermée du casse-noix, le premier levier (17) bute contre une paroi interne (24) du deuxième levier (18), dans la région de l'articulation à tourillon (20) avec le deuxième levier (18).

6. Casse-noix selon la revendication 3, dans lequel une extrémité du premier levier (37) est reliée au moyen d'une articulation à tourillon (39) à l'extrémité correspondante de la deuxième mâchoire (32) et l'autre extrémité du premier levier (37) est reliée au moyen d'une articulation à tourillon (40) à une extrémité du deuxième levier (38), et dans lequel le deuxième levier (38) est relié, au voisinage de l'extrémité libre de la première mâchoire (31), au moyen d'une articulation à tourillon (42), à une portion en saillie (41) sur la première mâchoire (31).

7. Casse-noix selon la revendication 6, dans lequel, dans la position fermée du casse-noix, le deuxième levier (38) bute contre une paroi interne (43) de la portion en saillie (41) sur la première mâchoire (31), dans la région de l'articulation à tourillon (42) avec la première mâchoire (31) .

8. Casse-noix selon l'une quelconque des revendications précédentes, dans lequel les articulations à tourillon (13, 19, 20, 23 ; 33, 39, 40, 42) sont conçues de manière que l'une des deux pièces accouplées a la forme d'une fourche, avec l'autre des pièces accouplées étant insérée dedans, et avec une tige d'articulation qui relie les pièces l'une à l'autre et leur permet de tourner l'une par rapport à l'autre.

9. Casse-noix selon l'une quelconque des revendications précédentes, dans lequel les mâchoires (11, 12 ; 31, 32) comportent chacune un ensemble de dents en face à face (14, 15 ; 34, 35).
